# EUROPEAN PATENT APPLICATION

(11) **EP 1 174 833 A2**
(43) Date of publication of application: **23.01.2002**
(21) Application number: 00311713.2
(22) Date of filing: 27.12.2000
(51) Int. Cl.: G07F 19/00, G07C 9/00

(54) **Electronic commerce system and method**

(30) Priority: 26.06.2000 JP 2000191300
(71) Applicant: FUJITSU LIMITED, Kawasaki-shi, Kanagawa 211-8588 (JP)
(72) Inventor: Kotani, Seigo, Nakahara-ku, Kawasaki-shi (JP); Hasebe, Takayuki, Nakahara-ku, Kawasaki-shi (JP); Akiyama, Ryota, Nakahara-ku, Kawasaki-shi (JP); Sasaki, Takaoki, Minato-ku, Tokyo (JP); Yamanaka, Yusuke, Minato-ku, Tokyo (JP)
(74) Representative: Stebbing, Timothy Charles

(57) **Abstract**

Commercial transaction information and user identity information are input from a commercial transaction contents input part (11) and a user identity information reading part (20), and sent to a payment server (200), and commercial transaction information is generated by a commercial transaction information generating part (210). A user confirms contents of a commercial transaction presented through a commercial transaction information presenting part (31), and inputs a signature through a handwritten signature input part (30). Electronic signature data and commercial transaction information are sent to an electronic signature management server (100), and the input electronic signature data is compared with an authentic signature by a signature comparing part (130). Thereafter, abstract information of the electronic signature data and commercial transaction identity information for specifying the contents of a commercial transaction are embedded in the electronic signature data as electronic watermark information to generate electronic signature data with an electronic watermark.

## Description

The present invention relates to an electronic commerce system and method for operating electronic commerce processing between a user and a dealer by transmitting/receiving electronic data, using a medium storing user identity information such as a credit card and a debit card. In particular, the present invention relates to an electronic commerce system and method for preventing fraud on both the user and dealer sides by utilizing a hand-written signature as electronic data, and embedding an electronic watermark in the electronic signature.

A commercial transaction using a credit card has spread in the society, and recently, a debit card that allows for immediate paying from a user's bank account has been introduced into the market. Thus, electronic commerce is becoming more common. According to electronic commerce using a medium storing user identity information such as a card, in order to confirm the authenticity of a user, in most cases, a user places a signature on a transaction slip at a time of a commercial transaction, and a dealer compares the user's handwritten signature with a signature for user authentication that has already been described on the back side of a card to confirm the authenticity of the user, whereby fraudulent use of a card by a user is suppressed. However, according to this system, in the case where a person who has fraudulently obtained another's card, and practiced writing the signature written on the back side of the card and imitated it, it may be difficult for a dealer who has not particularly trained to distinguish fraudulent signatures from a true signature. It may also be difficult to completely prevent fraudulent use of a card by a person who pretends to be a card owner, using a fraudulent signature. Further, it is required for a dealer to leave a transaction record in preparation for possible complaints from the user side, a request for confirmation of the contents of a commercial transaction, and a commercial transaction audit; therefore, the dealer keeps transaction slips each having a user's signature for a predetermined period of time. However, a considerable amount of troublesome work and cost is required for keeping the transaction slip, and a cost for searching for the transaction slip is high.

Conventionally, a handwriting comparison technique is utilized. As a technique of suppressing such fraudulent use of a card, or a technique of reducing a cost for keeping transaction slips, a system has been proposed for comparing an electronic signature input through a pen input apparatus such as a tablet with a previously registered user's electronic signature so as to confirm the authenticity of a user. For example, JP 10(1998)-320465 A (Card credit facility and payment system) discloses that a dealer terminal is provided with an input port for inputting an electronic signature to make paper transaction slips unnecessary, thereby reducing a cost. Furthermore, JP 11(1999)-144056 A (Electronic signature comparison method and system) discloses a technique of confirming the authenticity of a user by comparing an electronically input hand-written signature with registered signature data. According to the technique of confirming the authenticity of a user by using an electronic signature, the authenticity of a user can be confirmed by utilizing information, which cannot be read from a final handwriting shape, such as a writing order, a writing pressure, and a writing speed of a user. Therefore, even though a false user practices and imitates handwriting, such a fraudulent signature can be determined as a false one unless there is a match based on non-shape information. Therefore, the fraud preventing effect of the technique disclosed by JP 11(1999)-144056 A is high.

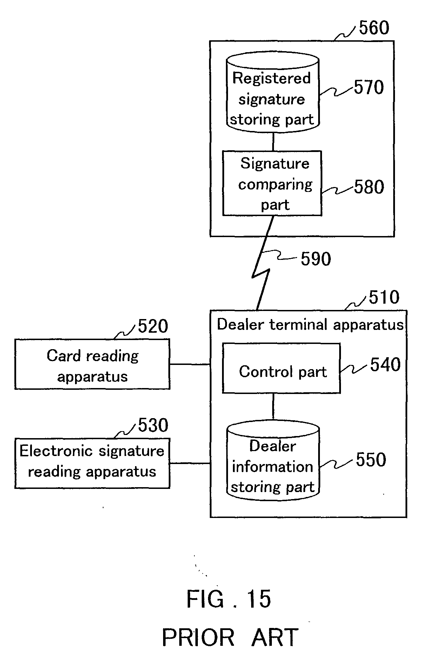

An exemplary system configuration combined with the above-mentioned conventional electronic commerce method will be described with reference to Figure 15.

In Figure 15, reference numeral 510 denotes a dealer terminal set at a shop or the like on the dealer side, 520 denotes a card reading apparatus for reading a card that is a recording medium storing user identity information, 530 denotes an electronic signature reading apparatus, such as an electronic tablet, for a user to input a hand-written signature, 540 denotes a control part of the dealer terminal 510, 550 denotes a commercial transaction information storing part for storing commercial transaction information provided in a storage part of a server on the dealer side, 560 denotes an authentication server provided in an authentication center for confirming the authenticity of a user based on a hand-written signature, 570 denotes a registered signature storing part, provided in the authentication server 560, for storing a hand-written signature which a user has registered as an authentic signature, 580 denotes a signature comparing part for comparing an electronic signature input during the current commercial transaction with a registered signature stored in the registered signature storing part 570, and 590 denotes a network between the dealer terminal 510 and the authentication server 560.

In making a payment for a purchased article, a user inserts a credit card or the like into the card reading apparatus 520, and inputs user identity information. Further, a user writes a hand-written signature through the electronic signature reading apparatus 530, and inputs it as an electronic signature. The control part 540 of the dealer terminal 510 sends the obtained user identity information and the electronic signature to the authentication server 560 through the network 590. In the signature comparing part 580, the authentication server 560 compares the input electronic signature with the registered signature stored in the registered signature storing part 570. In the case where the authentication server 560 determines a match therebetween, the authentication server 560 informs the control part 540 in the dealer terminal 510 of the user authentication results (i.e., the user is an authentic card owner). After a commercial transaction is completed, the dealer terminal 510 stores information regarding the commercial transaction in the commercial transaction information storing part 550 in the server on the dealer side. In the case where there is a doubt about the authenticity of the electronic signature in the signature comparing part 580, the control part 540 is informed of that a user has not been authenticated. The dealer terminal 510 can perform error processing such as rejecting the commercial transaction, warning, and prompting a user to reenter a signature. According to the above-mentioned structure, fraudulent use of a card can be suppressed. Further, commercial transaction information can be stored as electronic data together with an electronic signature in the storage part of the dealer side terminal, in place of using a conventional paper medium, which results in a reduction of a cost for keeping paper slips and a cost for searching for slips during an audit.

As described in the prior art, if a hand-written signature input at a time of a commercial transaction is electronized to be an electronic signature, a user's registered signature and an electronic signature input for each commercial transaction can be authenticated by utilizing information that cannot be read from a final handwriting shape, such as a writing order, a writing pressure, and a writing speed of a user. This enhances effects of suppressing fraudulent use on the user side. Further, since data to be stored is electronic data, a cost for keeping transaction slips on the dealer side can be substantially reduced.

However, from the user's point of view, a user's hand-written signature is taken in the dealer side terminal and kept as electronic data, which may increase the possibility of fraudulent use, such as malicious signature theft on the dealer side, and duplication and misappropriation of a signature for a fictitious commercial transaction, leading to security problems. More specifically, since a user's signature is taken in the dealer side terminal as electronic data, electronic signature data can be easily stolen and duplicated, and there may be a possibility that the electronic signature is misappropriated for a fictitious commercial transaction by the dealer side.

Therefore, with the foregoing in mind, it is an object of the present invention to provide an electronic commerce system and method for preventing an electronic signature from being stolen and duplicated by a dealer or a third party, and effectively preventing misappropriation of the electronic signature for a fictitious commercial transaction or the like, in place of authenticating a user by merely adding an electronically input electronic signature to commercial transaction information obtained by electronizing a transaction slip.

Another object of the present invention is to provide an electronic commerce system and method in which an authentication precision is higher, compared with that of user authentication using a hand-written signature with respect to a transaction slip of a conventional paper medium, and costs for keeping and searching for commercial transaction information on the dealer side are reduced.

In order to solve the above-mentioned problem, the electronic commerce system using an electronic signature with an electronic watermark of the present invention is an electronic commerce system for conducting a commercial transaction between a user and a dealer including: a user identity information reading part provided in a dealer terminal, for reading user identity information presented by the user; a commercial transaction information presenting part provided in the dealer terminal, for presenting commercial transaction information representing contents of the commercial transaction; a hand-written signature input part provided in the dealer terminal, for reading a hand-written signature input by the user who agrees to the presented commercial transaction information as electronic signature data; an electronic watermark embedding part provided in a third-party organization, for obtaining commercial transaction information representing contents of the commercial transaction, the user identity information, and the electronic signature data from the dealer terminal, and providing commercial transaction identity information that uniquely specifies the commercial transaction to the electronic signature data as electronic watermark information, thereby generating electronic signature data with an electronic watermark; and a commercial transaction data storing part provided in the dealer terminal, for obtaining the electronic signature data with an electronic watermark, and storing the electronic signature data together with the commercial transaction information.

According to the above-mentioned structure, information on a commercial transaction can be stored and managed in an electronic data form, which enhances the convenience of a commercial transaction, and reduces costs for storing data and searching for data at a time of an audit. Further, since electronic signature data with an electronic watermark is generated in which an electronic signature with an electronic watermark is embedded, an electronic signature can be prevented from being stolen or misappropriated for a fictitious commercial transaction by a malicious dealer. Further, since the electronic watermark embedding part is managed and operated by a third party organization that is different from a user and a dealer, security against fraudulent use of a card, and theft of a hand-written signature and misappropriation thereof for a fictitious commercial transaction by a dealer can be enhanced.

According to the above-mentioned structure, although the hand-written signature input part is provided at the dealer terminal, it may be provided at the user terminal.

According to the above-mentioned structure, since the hand-written signature input part is provided at the user terminal, security against theft of an electronic signature and misappropriation thereof for a fictitious commercial transaction by a malicious dealer can be enhanced, compared with the structure in which the hand-signature input part is provided at the dealer terminal. Further, psychological effects can be expected, in which a user's feeling of resistance to input of an electronic signature is relaxed.

According to the above-mentioned structure, although the electronic watermark embedding part is provided in the third-party organization, it may be provided at the user terminal.

According to the above-mentioned structure, since the electronic watermark embedding part is provided at the user terminal, user confirmation for processing of providing an electronic watermark can be made unnecessary.

Further, it is preferable that the third-party organization includes a signature authenticating part for searching for previously registered authentic signature data of the user, based on the user identity information, and comparing the input electronic signature data with the authentic signature data, thereby authenticating the electronic signature data.

According to the above-mentioned structure, a user can be authenticated by using electronic signature data and authentic signature data at a time of a commercial transaction, which further enhances commercial transaction security.

Next, in the electronic commerce system of the present invention, it is preferable that the electronic watermark embedding part includes an electronic signature data abstracting part for generating abstract information by abstracting the authenticated electronic signature data to electronic data with a previously specified bit length, and provides the abstract information as well as the commercial transaction identity information to the electronic signature data as electronic watermark information.

According to the above-mentioned structure, abstract information that is uniquely generated from electronic signature data as well as the commercial transaction identity information can be provided as electronic watermark information. Therefore, security against counterfeiting of electronic signature data is further enhanced.

Further, in the electronic commerce system of the present invention, the electronic watermark embedding part includes a user confirming part for directly inquiring of the user about agreement on generating of electronic signature data with an electronic watermark in the commercial transaction, based on registered user's contact information, in a case where electronic. signature data is transmitted through the dealer terminal, and the user confirming part notifies the dealer terminal of rejection of generation of the electronic signature data with an electronic watermark, in a case where user's confirmation is not obtained. Therefore, a user can be confirmed previously without involving a third party before establishment of commercial transaction. In the case where user's confirmation is not obtained, generation of electronic signature data with an electronic watermark can be notified, which ensures high security.

Further, the above-mentioned electronic commerce system may include a hand-written signature omission determining part for determining whether or not processing of authenticating hand-written signature is omitted, based on the commercial transaction information, wherein, in a case where omission of a hand-written signature is admitted by the hand-written signature omission determining part, reading of electronic signature data by the hand-written signature input part and generation of the electronic signature data with an electronic watermark by the electronic watermark embedding part are omitted, and the read user identification information and the commercial transaction information are stored in the commercial transaction data storing part.

According to the above-mentioned structure, although a security level of a commercial transaction is lowered, this will not cause any problem in the case where simplified commercial transaction processing tolerates practical use, depending upon the value and type of a commercial transaction, and the contents of a commercial transaction can be reduced, which makes the processing efficient.

According to the present invention, there is also provided a system for verifying the contents of a commercial transaction in the case where the authenticity of the commercial transaction information in the past becomes an issue on the payment organization side or the dealer side after the commercial transaction is completed.

The electronic commerce system for verifying correctness of commercial transaction between a user and a dealer of the present invention includes: commercial transaction information obtaining part for obtaining commercial transaction information representing contents of the commercial transaction; an electronic signature data with an electronic watermark obtaining part for obtaining electronic signature data with an electronic watermark in which commercial transaction identity information uniquely specifying the commercial transaction is provided as electronic watermark information to the electronic signature data used for the commercial transaction; a tampering check part for inspecting the electronic watermark information of the electronic signature data with an electronic watermark, thereby checking whether or not the electronic signature data with an electronic watermark is tampered; a commercial transaction identity information extracting part for extracting commercial transaction identity information from the electronic watermark information of the electronic signature data with an electronic watermark; a commercial transaction information searching part for obtaining commercial transaction information uniquely specified by the commercial transaction identity information from the commercial transaction information storing part storing authentic commercial transaction information; and a verifying part for comparing the commercial transaction information obtained by the commercial transaction information obtaining part with the commercial transaction information obtained by the commercial transaction information searching part.

According to the above-mentioned structure, input commercial transaction information to be verified can be compared with authentic commercial transaction information that is uniquely specified from stored authentic commercial transaction information, based on electronic signature data with an electronic watermark, whereby it can be verified whether or not the commercial transaction information to be verified is authentic.

The electronic commerce system using an electronic signature with an electronic watermark of the present invention can be constructed by using a computer by reading a processing program from a computer-readable recording medium storing processing steps of realizing the electronic commerce system with an electronic watermark.

Furthermore, the electronic commerce system of the present invention can be configured by a computer based platform by installing a processing program that can provide processing steps for realizing the above-mentioned electronic commerce system of the present invention.

These and other advantages of the present invention will become apparent to those skilled in the art upon reading and understanding the following detailed description with reference to the accompanying figures.

Figure 1 is a block diagram showing an exemplary structure of an electronic commerce system in Embodiment 1 of the present invention.

Figure 2A shows an example of a handwriting shape of an electronic signature, and Figure 2B shows an example of electronic signature data represented as dot sequence data of coordinate points.

Figure 3 schematically shows a state where a coordinate point Pi' is embedded between two adjacent coordinate points Pi and Pi+1 so as to divide an interval therebetween into N:M.

Figure 4 is a flow chart showing the process of an electronic commerce system and method in Embodiment 1.

Figure 5 is a block diagram showing an exemplary structure of an electronic commerce system in Embodiment 2 of the present invention.

Figure 6 is a flow chart showing the process of an electronic commerce system and method in Embodiment 2.

Figure 7 is a block diagram showing an exemplary structure of an electronic commerce system in Embodiment 3 of the present invention.

Figure 8 is a flow chart showing the process of an electronic commerce system and method in Embodiment 3.

Figure 9 is a block diagram showing an exemplary structure of an electronic commerce system in Embodiment 4 of the present invention.

Figure 10 is a flow chart showing the process of an electronic commerce system and method in Embodiment 4.

Figure 11 is a block diagram showing an exemplary structure of an electronic commerce system in Embodiment 5 of the present invention.

Figure 12 is a flow chart showing the process of an electronic commerce system and method in Embodiment 5.

Figure 13 is a block diagram showing an exemplary structure of a system for confirming the authenticity of an electronic signature in Embodiment 6.

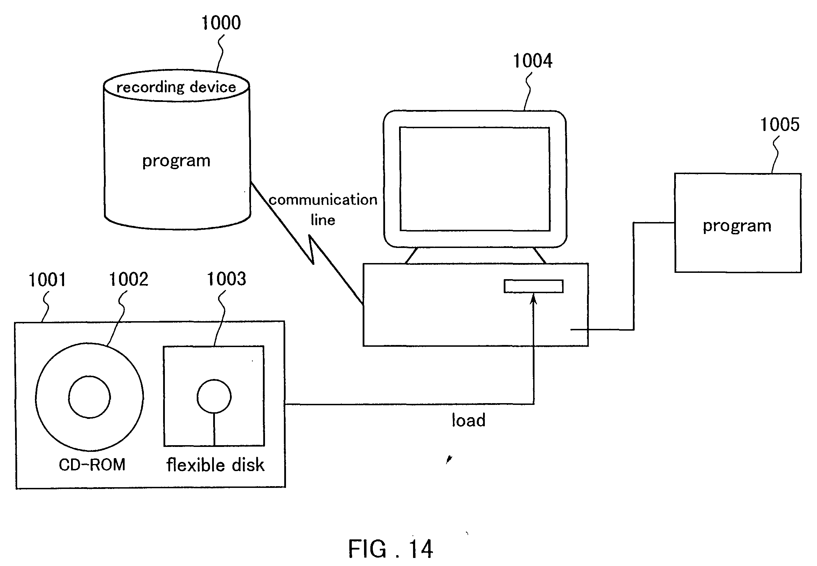

Figure 14 shows examples of recording media storing a processing program for realizing an electronic commerce system using an electronic signature with an electronic watermark in Embodiment 6 of the present invention.

Figure 15 shows an exemplary system configuration combined with a conventional electronic commerce method.

Embodiments of an electronic commerce system and an electronic commerce method of the present invention will be described below. In the following description, the case will be explained where the present invention is applied to a commercial transaction in which an article is purchased by credit at a shop. It should be noted that the present invention is applicable to an application in which a signature is used for authenticating a user.

### Embodiment 1

An electronic commerce system and an electronic commerce method in Embodiment 1 will be described with reference to the drawings.

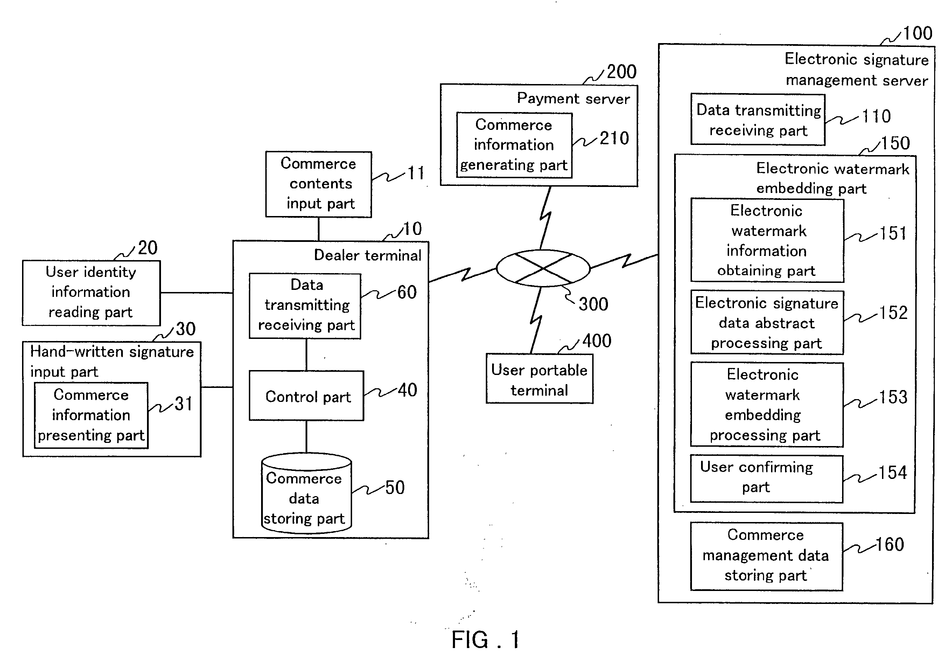

Figure 1 is a block diagram showing an exemplary structure of an electronic commerce system in Embodiment 1.

In Figure 1, reference numeral 10 denotes a dealer terminal, 20 denotes a user identity information reading part, 30 denotes a hand-written signature input part, 40 denotes a control part of a dealer terminal, 50 denotes a commercial transaction data storing part, and 60 denotes a data transmitting/receiving part. In the structure of Embodiment 1, the dealer terminal 10 is provided with the hand-written signature input part 30, and the hand-written signature input part 30 includes a commercial transaction information presenting part 31.

Reference numeral 100 denotes an electronic signature management server managed by an electronic signature management organization that is a third party. The electronic signature management server 100 includes a data transmitting/receiving part 110, an electronic watermark embedding part 150, and a commercial transaction management data storing part 160. In Embodiment 1, the dealer terminal 10 includes a commercial transaction contents input part 11, and the electronic watermark embedding part 150 includes an electronic watermark information obtaining part 151, an electronic signature data abstract processing part 152, an electronic watermark embedding processing part 153, and a user confirming part 154.

Reference numeral 200 denotes a payment server. The payment server 200 includes a commercial transaction information generating part 210. It is assumed that the payment organization and the electronic signature management organization are third parties that are different from a user and a dealer. The payment organization and the electronic signature management organization may be separate organizations or may be the same entity. The commercial transaction information generating part 210 may be included in the electronic signature management server 100.

Reference numeral 300 denotes a network such as a telephone line and the Internet. Reference numeral 400 denotes a user portable terminal such as a mobile phone carried by a user.

Hereinafter, the components shown in Figure 1 will be briefly described.

The dealer terminal 10 installed at a shop of a dealer is connected to the payment server 200 and the electronic signature management server 100 through a telephone line or the Internet.

The commercial transaction contents input part 11 is used for inputting information on commercial transaction contents such as an article price and an article code to the dealer terminal 10 at a time of a commercial transaction. For example, information on commercial transaction contents such as an article price and an article code input thorough a register and a POS terminal installed at a shop may be transmitted to the dealer terminal 10.

The user identity information reading part 20 is used for reading user identity information, and has various forms in accordance with a recording medium storing user identity information. For example, if the recording medium is a card with a magnetic stripe, the user identity information reading part 20 becomes a magnetic stripe reader of a card. If the recording medium is an IC card, the user identity information reading part 20 becomes an IC card reader. Further, in the case where a personal identification number (PIN) is used together, the user identity information reading part 20 is provided with a PIN number input ten key. In the case of using biometric information such as a fingerprint and a voice print, the user identity information reading part 20 is provided with a dedicated device for reading the information.

The hand-written signature input part 30 is used for reading a hand-written signature as electronic data, and its example includes an electronic tablet. Any kinds of tablets such as an electromagnetic induction type tablet, a pressure-sensitive tablet, and an optical tablet may be used as long as it is capable of converting a hand-written signature into electronic data. It is preferable that such a tablet can read various information used for identification with respect to a hand-written signature, such as a writing order, a writing pressure, and a writing speed of a user, as well as a final handwriting shape.

The commercial transaction information presenting part 31 presents commercial transaction information on commercial transaction contents to a user for confirmation when the user places a signature. Herein, the commercial transaction information refers to information representing commercial transaction contents containing a dealer number, a dealer slip number, a commercial transaction value, and the like. In particular, a commercial transaction value is indispensable for commercial transaction information for the purpose of preventing tempering by a dealer. In the structure of Embodiment 1, commercial transaction information is generated by the commercial transaction information generating part 210 provided in the payment server 200. More specifically, information representing commercial transaction contents input through the commercial transaction contents input part 11 in the dealer terminal 10 and user identity information read through the user identity information reading part 20 are sent to the payment server 200, and commercial transaction information is generated based on the sent information in the payment server 200. The commercial transaction information corresponds to a slip without a signature in the conventional paper slip processing. A user confirms the contents of the commercial transaction information presented by the commercial transaction information presenting part 31, and in the case of agreeing to them, inputs a hand-written signature through the hand-written signature input part 30. Herein, if the commercial transaction information presenting part 31 is allowed to present commercial transaction information by utilizing an electronic tablet of the hand-written signature input part 30 or the like, a user can input a hand-written signature in a signature section in the commercial transaction information presented on the electronic tablet.

The control part 40 of the dealer terminal 10 controls the operation of the dealer terminal 10.

The commercial transaction data storing part 50 stores and keeps electronic signature data with an electronic watermark after the current commercial transaction is established and completed.

The data transmitting/receiving part 60 transmits/receives data between the electronic signature management server 100 and the payment server 200, and is provided with a communication interface.

Next, the payment server 200 will be described. The payment server 200 is managed by a payment organization such as a credit company and a bank, and insures credibility with respect to a payment. The payment server 200 includes the commercial transaction information generating part 210. Commercial transaction information is generated based on the information representing the commercial transaction contents sent from the dealer terminal 10 and the user identity information. Insurance of credibility is given when commercial transaction information is obtained in which an electronic watermark determined to be authentic is embedded in electronic signature data (i.e., electronic signature data with an electronic watermark is obtained).

Next, the components of the electronic signature management server 100 will be briefly described.

The data transmitting/receiving part 110 transmits/receives data with respect to the dealer terminal 10, and is provided with a communication interface.

Optionally, a user authenticating part may be provided. The user authenticating part authenticates a user of the current commercial transaction. The user authenticating part authenticates a user by using information for confirming the authenticity of a user, such as a PIN and biometric information input if required and information on the loss of a card, as well as information on whether or not a signature is authentic, given by the signature comparing part 130. In order to simplify the processing, it may also be possible to determined the authenticity of a user, only based on information regarding whether or not a signature is authentic.

In Embodiment 1, the electronic watermark embedding part 150 is provided as an indispensable component. The electronic watermark embedding part 150 embeds electronic watermark information in the commercial transaction information obtained from the dealer terminal 10 and the electronic signature data input through the hand-written signature input part 30, thereby generating electronic signature data with an electronic watermark.

In Embodiment 1, optionally, the commercial transaction management data storing part 160 is provided. The commercial transaction management data storing part 160 registers and holds electronic signature data with an electronic watermark generated by the electronic watermark embedding part 150. The commercial transaction management data storing part 160 registers electronic signature data with an electronic watermark generated in preparation for the possible case where some trouble occurs between the user and the dealer in the future.

Next, each component of the electronic watermark embedding part 150 will be described.

The electronic watermark information obtaining part 151 obtains information to be electronic watermark information. Examples of electronic watermark information include commercial transaction identity information representing the contents of the current commercial transaction, and abstract information generated from the electronic signature data of a user. Herein, the commercial transaction identity information refers to information for allowing the contents of a commercial transaction to be separately specified and identified. For example, the commercial transaction identity information may be a serial number or code. Further, the commercial transaction identity information may include at least dealer identity information for specifying a dealer handling the commercial transaction, user identity information for specifying a user involved in the commercial transaction, commercial transaction dealer management information provided by the dealer side for specifying the commercial transaction, electronic signature data input by the user, payment value information regarding the commercial transaction, and information on date and time when the commercial transaction has been processed. These pieces of information are considered to be effective for identifying a commercial transaction showing the contents of the current commercial transaction. The commercial transaction identity information is sent from the dealer terminal 10, and received by the electronic signature management server 100 through the data transmitting/receiving part 110.

In Embodiment 1, abstract information generated from electronic signature data of a user is used as additional information. The abstract information is generated by the electronic signature data abstract processing part 152. The electronic signature data abstract processing part 152 compresses electronic signature data to a predetermined data length in accordance with the data length abstract algorithm. If electronic signature data is tampered, a difference will be detected between the extracted abstract information and the calculated abstract information obtained by re-calculation; therefore, tampering can be detected.

The electronic watermark embedding processing part 153 embeds electronic watermark information in electronic signature data.

Hereinafter, electronic watermark embedding processing by the electronic watermark embedding processing part 153 will be described in detail. The purpose of an electronic watermark is to prevent electronic data from being fraudulently duplicated. Various effects can be obtained by embedding an "electronic watermark" in electronic signature data. For example, a human being cannot apparently recognize if an "electronic watermark" is embedded or not. Further, the electronic signature management organization can read watermark information, if required. Further, a third party cannot remove watermark information from electronic data without knowing an embedded algorithm. Further, when watermark information is forced to be removed, tampering can be detected and fraudulent data can be identified. There are a plurality of methods for embedding an electronic watermark in electronic signature data, and it is possible to select either one of them in accordance with an electronic signature data format. Typically, electronic signature data is expressed as a still image composed of a binary value bit-map or other multiple value bit-map, or expressed as time series dot sequence data of two-dimensional coordinate points. In Embodiment 1, electronic watermark information is embedded in electronic signature data expressed as time series dot sequence data of two-dimensional coordinate points, which allows signature comparison to be performed at a high precision.

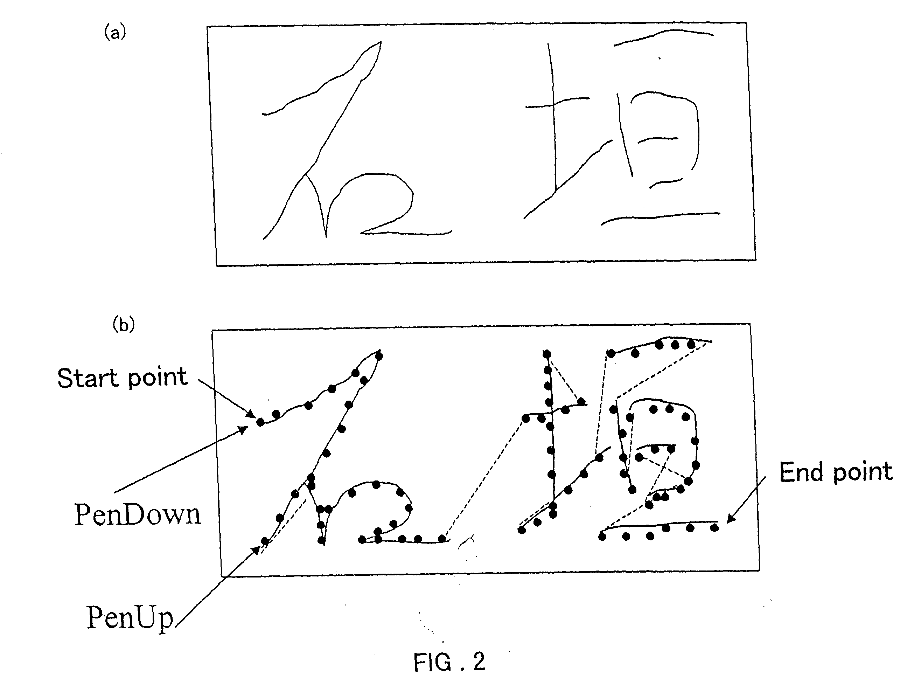

Electronic signature data is taken in through the hand-written signature input part 30. Examples of the hand-written signature input part 30 include a device for detecting a change in a position and a state of a pen tip involved in writing letters at a predetermined time interval, such as an electromagnetic induction type tablet and a pressure-sensitive tablet. When such a device is used, electronic signature data as shown in Figure 2A is expressed as dot sequence data of coordinate points as shown in Figure 2B. More exactly, assuming that positional coordinates of a coordinate point Pi are expressed as (Xi, Yi), and an attribute value thereof is expressed as Si = (PenDown, PenMove, PenUp), the Coordinate Pi is expressed as Pi: (Xi, Yi, Si). In this case, the entire electronic signature data is expressed as Sign = (n, P1, P2, .., Pn) (n is a natural number and varied depending upon the number of coordinate points). Herein, PenDown, PenUp, and PenMove are attribute values provided to a start point of a letter stroke, an end point of a letter stroke, and a middle point of a letter stroke, respectively. Some tablets may have, as attribute values, information obtained by quantizing a writing pressure, information on elapsed time from the beginning of writing, information on a pen tilt value, and the like. In the case where a coordinate value can be detected even when a pen is away from the writing surface as in an electronic induction type, PenUp may be provided to a coordinate point sampled while a pen tip is moving in the air, as well as an end point of a stroke

It is preferable that electronic watermark information is embedded in electronic signature data by using a redundant portion of electronic data undetectable by a human being. In the case of electronic signature data, for example, the following procedure is considered.

The first procedure is to embed information in lower-order bits of positional coordinates. It is assumed that the positional coordinates (Xi, Yi) of a coordinate point are expressed by 16 bits, respectively. In this case, an X-coordinate and a Y-coordinate have a resolution of 65536, respectively. In order to display a letter by a display apparatus, a resolution of about 100 × 100 dots is sufficient. Even at such a low resolution, a change in an X or Y-coordinate by ±1 can hardly be detected by human eyes. If a letter is expressed by higher resolution (i.e., 65536 resolution), even when lower-order 1 to 2 bits are used for embedding electronic watermark information, human eyes cannot detect this, and a signature identification algorithm is not influenced by this change. By utilizing such nature, a plurality of points Pj1, Pj2, .., Pjm determined by an electronic watermark embedding algorithm are selected among Sign = (n, P1, P2, .., Pn) (n is a natural number, and varied depending upon the number of coordinate points), and embed watermark information in lower-order bits of XY coordinate values. Needless to say, it is not disclosed in which point watermark information is embedded, and dummy data may be mixed in other points.

The second procedure is to embed redundant coordinate points in data. When electronic signature data is displayed by a display apparatus or a printer, a series of dot sequence from PenDown to PenUp are connected by lines (or a splined curve or a Bezier curve for further smoothening), whereby coordinate points are not usually displayed in a clear manner. Therefore, even when the same point as Pi is inserted after Pi in the stage of PenMove to obtain Sign = (n+1, P1, P2, .., Pi, Pi, .., Pn) (n is variable), human eyes cannot recognize it. Thus, by continuously embedding points having the same positional coordinates, watermark information can be embedded.

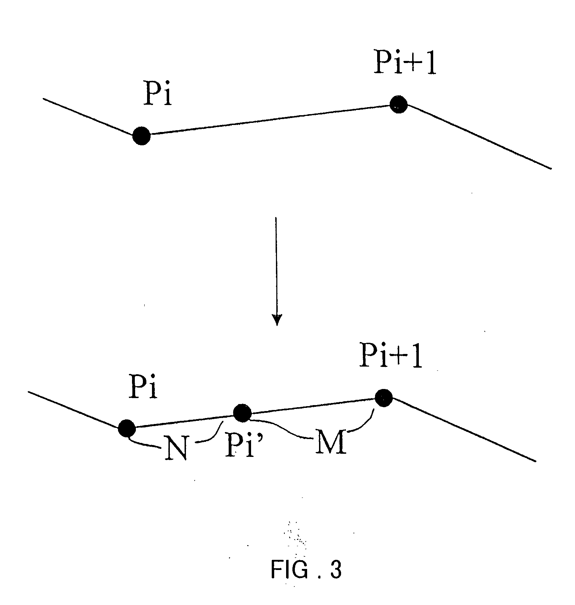

The third procedure is different from the second one in a procedure of embedding a redundant coordinate point. According to the second procedure, the same coordinate points are continued, so that it is relatively easy to find out which is a coordinate point of electronic watermark information by detecting whether or not the same coordinate points are continued. According to the third procedure, instead of embedding the same coordinate values, a coordinate point Pi' is embedded between two adjacent coordinate points Pi and Pi+1 so as to divide an interval therebetween into N:M, as shown in Figure 3. In this case, even when the coordinate point Pi' is embedded, a human being cannot recognize it. Further, in this case, there is a degree of freedom of a dividing ratio. This allows a plurality of selection redundancies to be obtained for embedding electronic watermark information, and makes it difficult to detect in which coordinate point watermark information is embedded, so that security becomes high. For example, assuming that N:M is 1:1, 1:2, 1:3, or 1:4, two bits of redundancy are obtained per coordinate point in which watermark information is embedded, and consequently, four kinds of embedding are possible. Needless to say, it is not disclosed in which position Pi watermark information is embedded.

As described above, a procedure of embedding electronic watermark information in electronic signature data has been described. The other procedures than the above-mentioned embedding procedure can be used in the electronic commerce system and method of the present invention. It is also possible to increase the amount of information to be embedded and enhance security by combining a plurality of procedures.

If an embedding algorithm is made secret, risk that embedded information is read by a third party become low. However, it is not enough for preventing tampering of electronic signature data. Therefore, according to the electronic commerce system and method of the present invention, in order to prevent tampering, an abstract function is applied to the entire electronic signature data by the electronic signature data abstract processing part 152, whereby abstract information of predetermined bits is generated. As the amount of bits for abstract information, about 8 bits are practically sufficient. This abstract information is given to the electronic watermark information obtaining part 151 as additional information, and used as a part of the electronic watermark data, whereby N bits of abstract information are embedded as an electronic watermark. When electronic signature data is tampered, a difference is detected between the extracted abstract information and the calculated abstract information obtained by re-calculation. Thus, tampering can be detected.

The electronic watermark embedding part 150 embeds electronic watermark information in electronic signature data to generate electronic signature data with an electronic watermark. Further, it is preferable to register and hold an electronic signature with an electronic watermark in the commercial transaction management data storing part 160, in preparation for some trouble in a commercial transaction.

In the structure of Embodiment 1, the user confirming part 154 is provided. The user confirming part 154 directly inquires of a user about agreement on generating of electronic signature data with an electronic watermark in the commercial transaction by getting access to a user based on registered user's contact information. This is one of means for enhancing security for preventing a fictitious commercial transaction using a false signature on the dealer side. This processing is for confirming a user about agreement on the current commercial transaction before establishment of the commercial transaction. It is preferable that a user directly communicates with the user confirming part 154 through a communication path such as the network 300 without the dealer terminal 10.

For example, a mobile phone number is registered as user's contact information, and the user confirming part 154 and a user communicate with each other about the contents of confirmation through a telephone line, utilizing a user's mobile phone. In this case, the user confirming part 154 includes telephone communication means and a voice response system, and inquires of a user about the contents of confirmation through the user portable terminal 400 such as a user's mobile phone by using voice information, whereby user's confirmation can be obtained. In an example, a message "please press button '1' when accepting a commercial transaction, and press button '0' when rejecting a commercial transaction" by a voice guide of a computer, and a "registration determination program" determines whether or not registration is confirmed by the button operation of a user. Further, in another example, the user confirming part 154 includes communication means with respect to the user portable terminal 400 held by a user, and inquires of a user about the contents of confirmation through the user portable terminal 400 to obtain user's confirmation in the form of electronic data. If a user terminal is capable of receiving multimedia electronic mail or the like, it may be possible that a "user authentication organization" sends electronic mail in an HTML form provided with reply buttons described by a Java script, and gives an instruction of a confirmation operation by using a message "please press "YES" button in the case of accepting an xx commercial transaction, and press "NO" button in the case of rejecting an xx commercial transaction" on a screen. Alternatively, a voice recognition part may be provided so that a user can answer by saying "YES" or "NO".

In the case where user's confirmation cannot be obtained, the user confirming part 154 determines that generation of electronic signature data with an electronic watermark is rejected, and notifies the control part 40 of the dealer terminal 10 of rejection.

The user confirming part 154 and the user directly communicate with each other without the dealer terminal 10, whereby a fictitious commercial transaction can be detected previously before establishment of a commercial transaction, and security of electronic commerce system can be enhanced.

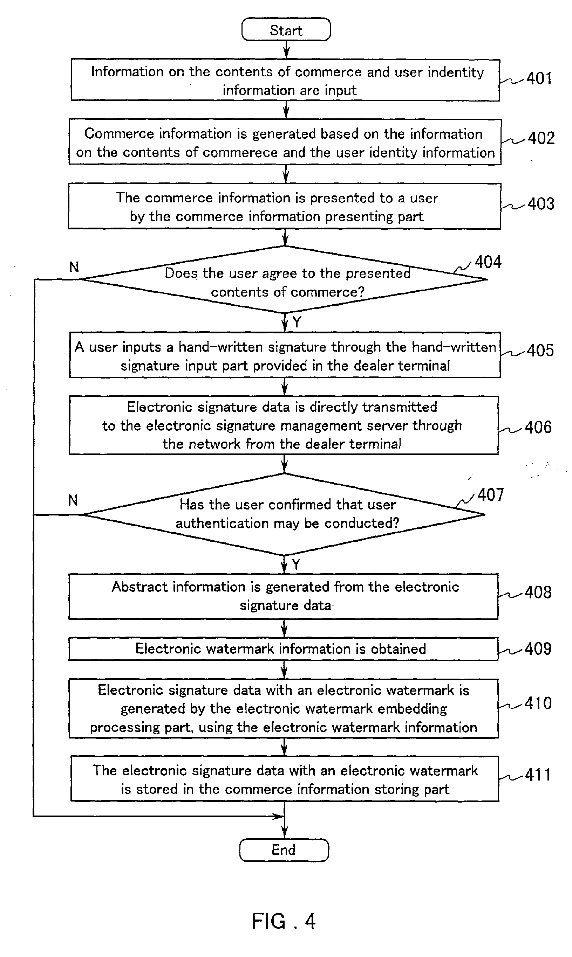

Next, the process flow of the electronic commerce system and method in Embodiment 1 of the present invention will be described with reference to Figure 4.

First, the contents of a commercial transaction such as purchase of an article are determined between a user and a dealer. The dealer inputs information on the contents of a commercial transaction, such as a dealer code, a commercial transaction code provided for the dealer to identify each commercial transaction, and a commercial transaction value, through the commercial transaction contents input part 11, while the user inputs user identity information to the dealer terminal 10 through the user identity information reading part 20 (Operation 401). In the case where user identity information is read from a card medium, the dealer (in place of the user) may insert a card into a card reader (i.e., the user identity information reading part 20) and allows the card to be read. In the case of using biometric information, the user operates the user identity information reading part 20.

The control part 40 of the dealer terminal 10 sends information on the contents of a commercial transaction and the user identity information to the payment server 200. The payment server 200 confirms the effectiveness of the card, credibility of the user, whether or not the dealer is affiliated, and the commercial transaction information generating part 210 generates commercial transaction information (Operation 402). It is assumed that the payment server 200 and the dealer terminal 10 are connected to each other through the network 300 capable of bidirectionally transmitting/receiving electronic data, such as a private line, the Internet, and a wireless communication line.

The generated commercial transaction information is given to the commercial transaction information presenting part 31 from the payment server 200, and the commercial transaction information presenting part 31 presents commercial transaction information to the user (Operation 403).

The user confirms the contents of a commercial transaction from the presented commercial transaction information (Operation 404). In the case where the user agrees to the commercial transaction (Operation 404: Y), the user places a hand-written signature in a hand-written signature section through the hand-written signature input part 30 (Operation 405).

The hand-written signature input part 30 obtains electronic signature data obtained by electronized information used for identification processing such as a final handwriting shape, a writing order, a writing pressure, and a writing speed from the hand-input signature, and sends the electronic signature data and the commercial transaction information to the electronic signature management server 100 (Operation 406). It is assumed that the electronic signature management server 100 and the dealer terminal 10 are connected to each other through the network 300 capable of bidirectionally transmitting/receiving electronic data, such as a private line, the Internet, and a wireless communication line.

Next, the electronic signature management server 100 receives the electronic signature data and the commercial transaction information through the data transmitting/receiving part 110. Herein, in the case where there is information for confirming the authenticity of the user, such as a PIN, biometric information, and information on a loss of a card, the user may be checked based on these pieces of information.

In the structure of Embodiment 1, the user confirming part 154 directly inquires of the user about agreement on generating of electronic signature data with an electronic watermark (Operation 407). More specifically, the user confirming part 154 inquires of the user about agreement on generating of electronic signature data with an electronic watermark in the commercial transaction, by using a voice guide or electronic data, through a mobile phone or a user portable terminal held by the user.

When user's confirmation is obtained (Operation 407: Y), the processing of the electronic watermark embedding part 150 is started. In the structure of Embodiment 1, the electronic signature data abstract processing part 152 generates abstract information from electronic signature data (Operation 408), the electronic watermark information obtaining part 151 obtains a commercial transaction identity information and abstract information specifying the contents of the current commercial transaction as electronic transparent information (Operation 409), the electronic watermark embedding processing part 153 embeds an electronic watermark in electronic signature data by an undisclosed algorithm, and generates electronic signature data with an electronic watermark (Operation 410).

The electronic signature management server 100 registers the electronic signature with an electronic watermark in the commercial transaction management data storing part 160, in preparation of some trouble in a commercial transaction. Further, the electronic signature management server 100 sends the electronic signature data with an electronic watermark thus generated to the dealer terminal 10 through the data transmitting/receiving part 110, and stores it in the commercial transaction data storing part 50 (Operation 411).

The electronic signature data with an electronic watermark is sent to the payment server 200 from the dealer terminal 10 or the electronic signature management server 100, and insurance of credibility with respect to the commercial transaction is given by the payment organization.

In the case where the user does not agree to the commercial transaction in Operation 404 (Operation 404: N), and in the case where user's confirmation cannot be obtained in Operation 407 (Operation 407: N), insurance of credibility with respect to the current commercial transaction cannot be given, and the current electronic commerce processing is cancelled.

The process of the electronic commerce system and method in Embodiment 1 is as described above. It is to be understood that the above-mentioned process is only an example, and the other processes may be used within the range of the technical idea of the present invention.

It may also be possible in the processing of the payment organization that electronic signature data with an electronic watermark is generated using commercial transaction information as an electronic watermark, the generated information is stored in the payment organization side at a time of a payment between the dealer and the payment organization, and the electronic signature data with an electronic watermark stored in the payment organization is compared with that sent from the dealer terminal side.

According to the electronic commerce system and method with the above-mentioned structure, the dealer cannot duplicate hand-written electronic signature data with an electronic watermark or misappropriate it for another fictitious commercial transaction. If such fraud is actually conducted, the electronic signature management organization searches for the electronic signature with an electronic watermark registered in the commercial transaction management data storing part 160, based on the sent electronic signature data with an electronic watermark with respect to the fictitious commercial transaction. Thus, it is possible to know whether or not the electronic signature has been formally registered for a commercial transaction, and if it is formally registered, which commercial transaction the electronic signature has been originally used for.

In an application, the electronic signature management organization directly inquires of a user about the authenticity of the user, whereby a fictitious signature which the user does not recognize can be prevented from being registered in the electronic signature management organization by a dealer or a third party. In the case of such an application, the user is required to hold a user portable terminal in execution of the commercial transaction; however, such a situation can be sufficiently expected based on the recent spread of mobile phones and i-mode. The above-mentioned confirmation of the authenticity of a user is not necessarily required in real time at a time of a commercial transaction. For example, it may also be possible that the confirmation is conducted within a day or a week, and if user's confirmation cannot be obtained in this stage, a commercial transaction is cancelled (invalidated). In this case, the user confirming part may be cable telephone communication, FAX communication, electronic mail communication, letter, and the like.

### Embodiment 2

An electronic commerce system and an electronic commerce method in Embodiment 2 will be described with reference to the drawings.

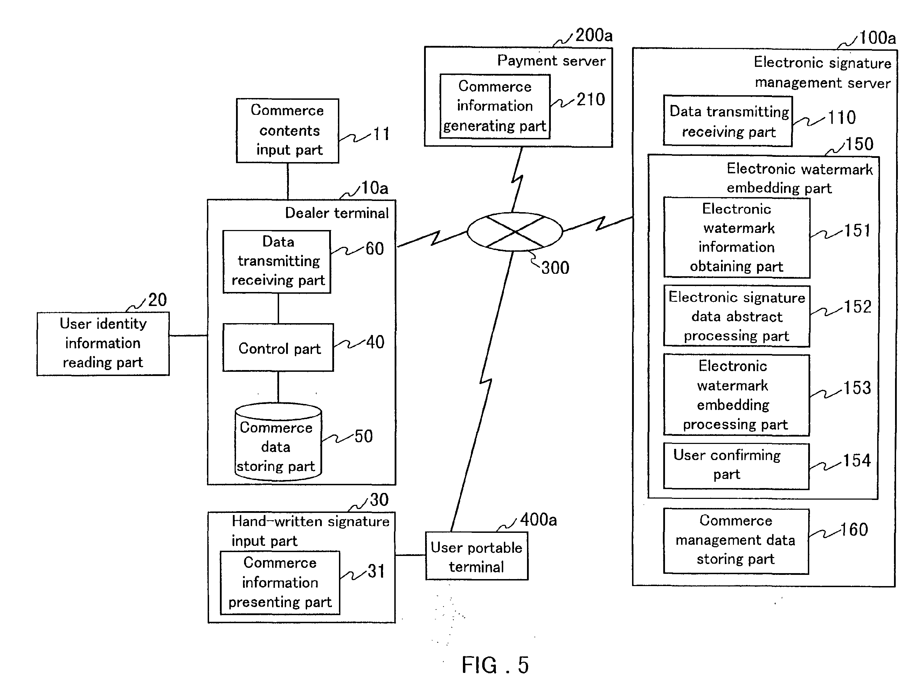

Figure 5 is a block diagram showing an exemplary structure of the electronic commerce system in Embodiment 2.

In Figure 5, the components of an electronic signature management server 100a, a payment server 200a, and a network 300 are the same as those described in Embodiment 1 with reference to Figure 1. The dealer terminal 10a includes a user identity information reading part 20, a control part 40 of the dealer terminal, a commercial transaction data storing part 50, and a data transmitting/receiving part 60; however, the dealer terminal 10a is not provided with a hand-written signature input part 30 and a commercial transaction information presenting part 31. A user portable terminal 400a includes the hand-written signature input part 30 and the commercial transaction information presenting part 31. Each component is the same as that in Embodiment 1. The description thereof will be omitted here.

According to the structure in Figure 5, the hand-written signature input part 30 is not connected to the dealer terminal 10. Therefore, a user and the electronic signature management server 100a communicate with each other through a user portable terminal 400a held by a user to transmit/receive electronic signature data, whereby security strength is further enhanced with respect to fraud such as misappropriation and duplication of a signature by a malicious dealer.

In the case of the structure shown in Figure 5, commercial transaction information generated by the commercial transaction information generating part 210 of the payment server 200a is directly sent to the user portable terminal 400a, and presented to the commercial transaction information presenting part 31. A user confirms the contents of the commercial transaction information, and inputs a hand-written signature to the hand-written signature input part 30. The user portable terminal 400a directly sends the commercial transaction information and the electronic signature data to the electronic signature management server 100a. An electronic watermark is embedded in the electronic signature data in the electronic signature management server 100a, and the electronic signature data with an electronic watermark is given to the dealer terminal 10. Thus, unlike Embodiment 1, the electronic signature data without an electronic watermark will not pass through the dealer terminal 10a. This enhances security against fraud such as misappropriation and duplication of a signature by a malicious dealer. Further, it is not required to input a signature to the hand-written input part 30 connected to the dealer terminal 10a, so that privacy protection is enhanced, and a user can conduct electronic commerce with mental safety.

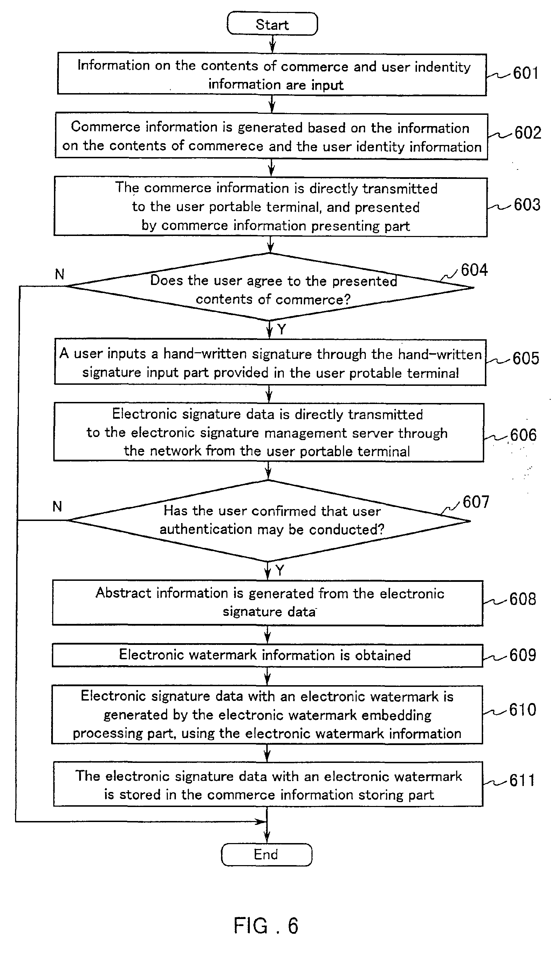

The process of the electronic commerce system and method in Embodiment 2 will be described with reference to the flow chart in Figure 6.

First, input operation of information on the contents of commerce and the user identity information through the commercial transaction contents input part 11 and the user identity information reading part 20 (Operation 601), and generation of commercial transaction information by the commercial transaction information generating part 210 of the payment server 200a (Operation 602) are the same as Operations 401 and 402 described in Embodiment 1 with reference to the flow chart in Figure 4.

Next, the payment server 200a directly sends the generated commercial transaction information to the user portable terminal 400a such as a mobile phone carried by a user through the network 300 such as a wireless telephone line, and the commercial transaction information presenting part 31 of the user portable terminal 400a presents the received commercial transaction information to the user (Operation 603).

The user confirms the contents of a commercial transaction from the presented commercial transaction information (Operation 604), and in the case of agreeing to the commercial transaction (Operation 604: Y), the user inputs a hand-written signature in a hand-written signature section through the hand-written signature input part 30 of the user portable terminal 400a.

The hand-written signature input part 30 generates electronic signature data from the hand-input signature, and directly sends it to the electronic signature management server 100a through the network 300 such as a wireless telephone line from the user portable terminal 400a (Operation 606). The commercial transaction information may be transmitted by the user portable terminal 400a to the electronic signature management server 100a together with the electronic signature data. The commercial transaction information may also be transmitted to the electronic signature management server 100a from the payment server 200a.

The processing in the electronic signature management server 100a (i.e., user confirmation processing of inquiring of a user about agreement on the current commercial transaction by the user confirming part 154) (Operation 607), generation of abstract information from electronic signature data by electronic signature data abstract processing part 152 (Operation 608), obtaining of additional information by the electronic watermark information obtaining part (Operation 609), and generation of electronic signature data with an electronic watermark by the electronic watermark embedding processing part 153 (Operation 610) may be the same as those described in Embodiment 1 with reference to the flow chart in Figure 4.

Finally, the electronic signature management server 100a registers the electronic signature with an electronic watermark in the commercial transaction management data storing part 160, in preparation for some trouble in a commercial transaction. Further, the electronic signature management server 100a sends the generated electronic signature data with an electronic watermark to the dealer terminal 10a through the data transmitting/receiving part 110 and stores it in the commercial transaction data storing part 50 (Operation 611).

The process of the electronic commerce system and method in Embodiment 2 is as described above. It is to be understood that the above-mentioned process is only an example, and the other processes may be used within the range of the technical idea of the present invention.

Because of the above-mentioned electronic commerce system and method, a user can directly transmit electronic signature data to the electronic signature management server 100a, using the user portable terminal 400a carried by a user, and security strength against fraud such as misappropriation and duplication by a malicious dealer is further enhanced.

### Embodiment 3

An electronic commerce system and an electronic commerce method in Embodiment 3 will be described with reference to the drawings. In Embodiment 3, an electronic watermark embedding part is not installed at a third-party organization, but at a user terminal.

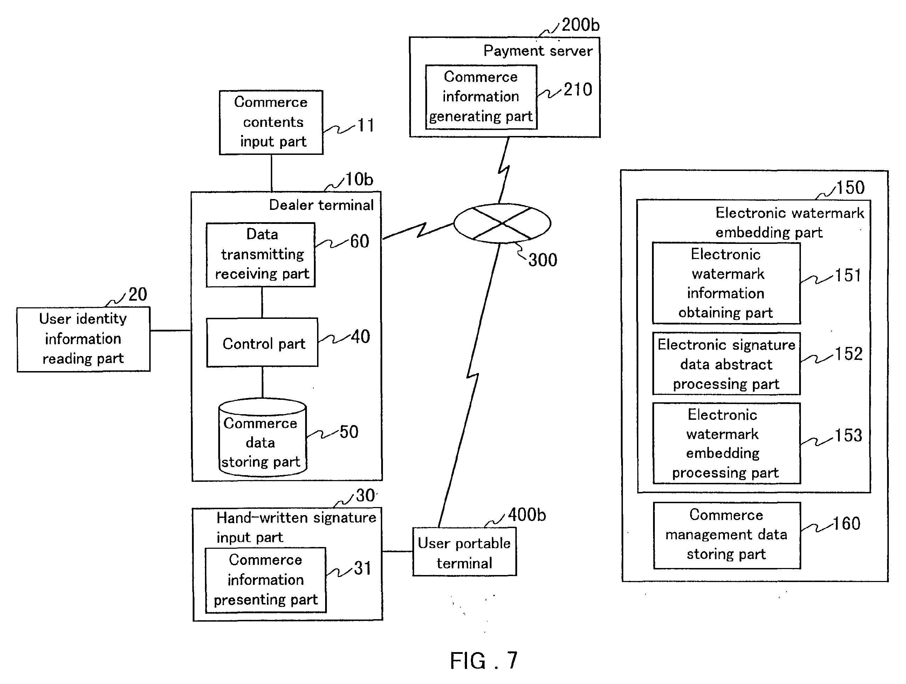

Figure 7 is a block diagram showing an exemplary structure of the electronic commerce system in Embodiment 3.

In Figure 7, the components of a payment server 200b and a network 300 are the same as those described in Embodiment 1 with reference to Figure 1. However, a part corresponding to the electronic signature management server 100 is not provided. A dealer terminal 10b includes a user identity information reading part 20, a control part 40 of the dealer terminal, a commercial transaction data storing part 50, and a data transmitting/receiving part 60. A user portable terminal 400b includes an electronic watermark embedding part 150 and an electronic signature data with an electronic watermark storing part 160, in addition to a hand-written signature input part 30 and a commercial transaction information presenting part 31. Each component is the same as that in Embodiment 1. Therefore, the description thereof will be omitted here.

According to the structure in Figure 7, the electronic watermark embedding part 150 is provided at the user portable terminal 400b. This arrangement makes it unnecessary to confirm a user for the processing of embedding an electronic watermark (which is required in the structures in Embodiments 1 and 2), and also makes it unnecessary to communicate with the electronic signature management server 100. Further, an electronic watermark is added at the user portable terminal 400b, so that it is not required to confirm a user before embedding of an electronic watermark unlike Embodiments 1 and 2.

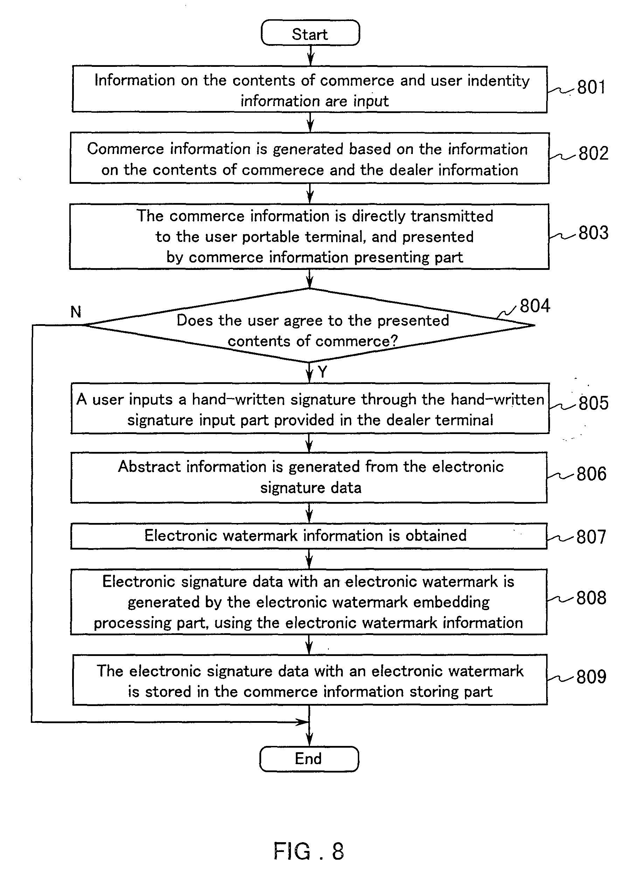

The process of the electronic commerce system and method in Embodiment 3 will be described with reference to a flow chart in Figure 8.

First, input processing of the information on the contents of commerce and the user identity information through the commercial transaction contents input part 11 and the user identity information reading part 20 (Operation 801), generation of commercial transaction information by the commercial transaction information generating part 210 of the payment server 200b (Operation 802), presentation of the commercial transaction information to a user through the commercial transaction information presenting part 31 of the user portable terminal 400b (Operation 803), confirmation by a user with respect to the presented commercial transaction information (Operation 804), input of a hand-written signature through the hand-written signature input part 30 of the user portable terminal 400b (Operation 805).

Next, the user portable terminal 400b generates abstract information from the electronic signature data by using the electronic signature data abstract processing part 152 (Operation 806). The electronic watermark information obtaining part 151 obtains commercial transaction identity information and abstract information specifying the contents of the current commercial transaction as electronic watermark information (Operation 807). The electronic watermark embedding processing part 153 embeds an electronic watermark in the electronic signature data by an undisclosed algorithm to generate electronic signature data with an electronic watermark (Operation 808).

The user portable terminal 400b sends the generated electronic signature data with an electronic watermark to the dealer terminal 10b and stores it in the commercial transaction data storing part 50 (Operation 809).

The process of the electronic commerce system and method in Embodiment 3 is as described above. It is to be understood that the above-mentioned process is only an example, and the other processes may be used within the range of the technical idea of the present invention.

According to the electronic commerce system and method with the above-mentioned structure, the electronic watermark embedding part is installed at a user terminal, which makes it unnecessary to confirm a user for the processing of providing an electronic watermark.

### Embodiment 4

An electronic commerce system and an electronic commerce method in Embodiment 4 will be described with reference to the drawings. In Embodiment 4, a signature authenticating part 170 is added.

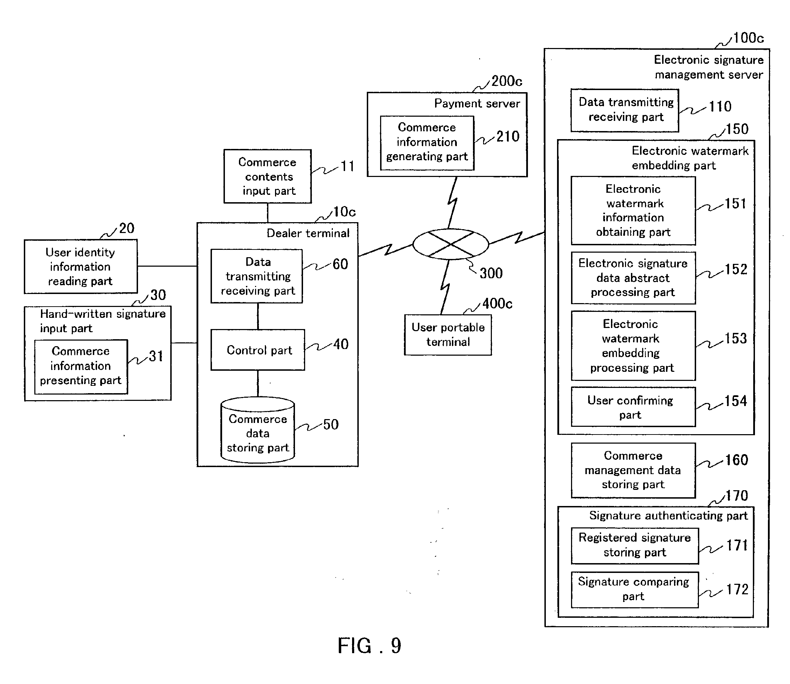

Figure 9 is a block diagram showing an exemplary structure of an electronic commerce system in Embodiment 4

In Figure 9, the components of a dealer terminal 10c, a payment server 200c, a network 300, and a user portable terminal 400c held by a user are the same as those described in Embodiment 1 with reference to Figure 1. An electronic signature management server 100c has a signature authenticating part 170. Each component other than those in the signature authenticating part 170 is the same as that in Embodiment 1. Therefore, the description thereof will be omitted here.

The signature authenticating part 170 authenticates whether or not a hand-written signature input by a user is authentic. The signature authenticating part 170 has the following components.

A registered signature storing part 171 stores a user's authentic signature previously provided by a user at a time of generation of a credit card or the like. Herein, in the same way as in Embodiment 1, it is assumed that a signature is registered and held as electronic data.

A signature comparing part 172 compares registered electronic signature data stored in the registered signature storing part 171 with user's electronic signature data input through the hand-written signature input part 30. The signature comparing part 172 conducts this processing by using various information such as a writing order, a writing pressure, and a writing speed, as well as a final handwriting shape, in accordance with comparison precision required by the system, and outputs information on whether or not the input signature is authentic.

According to the structure including the signature authenticating part 170, the registered authentic electronic signature data can be matched with user's electronic signature data input through the hand-written signature input part 30 at a time of a commercial transaction, whereby a user can be authenticated at a high security level. Conventionally, a dealer used to visually compare a currently hand-written signature with an authentic signature described on the back side of a user card at a shop. In contrast, according to the present invention, signature comparison can be exactly conducted with high security.

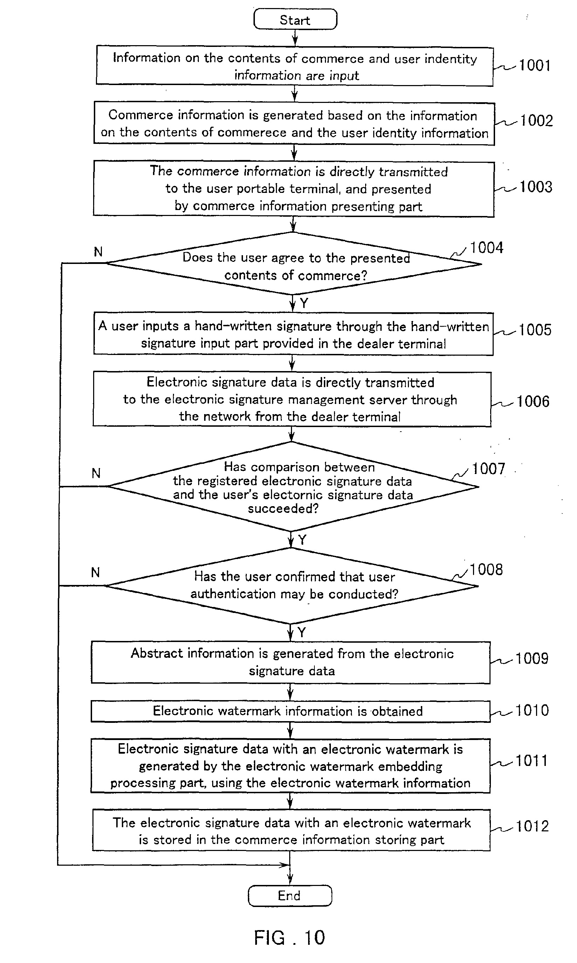

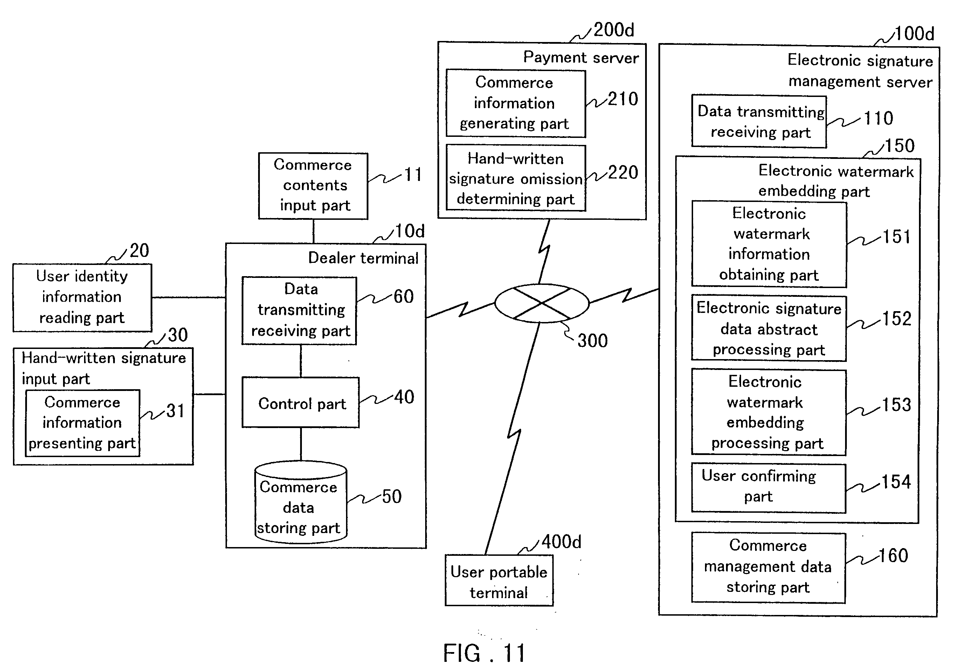

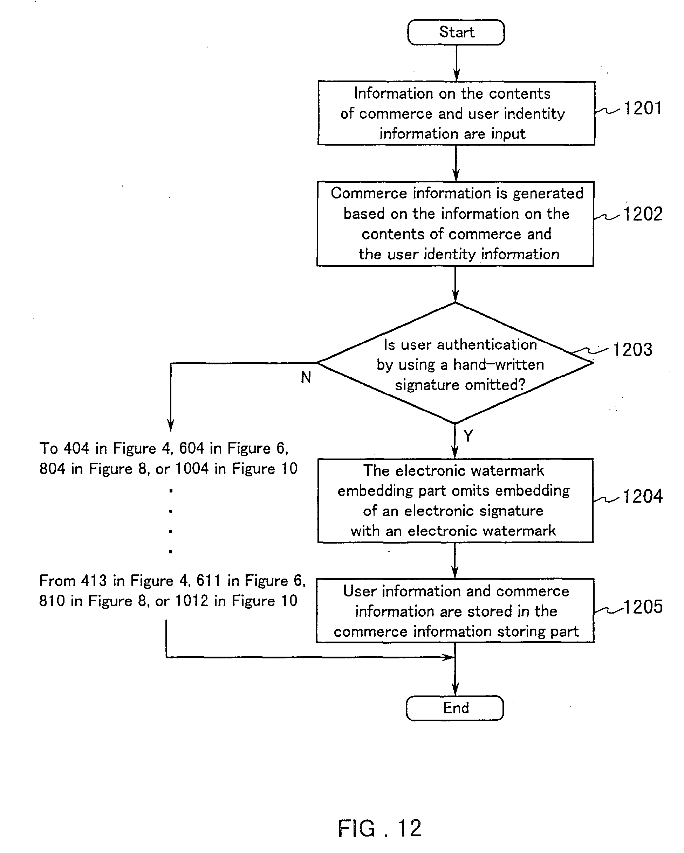

The process of the electronic commerce system and method in Embodiment 4 will be described with reference to the flow chart in Figure 10.

First, input processing of the information on the contents of commercial transaction and the user identity information through the commercial transaction contents input part 11 and the user identity information reading part 20 (Operation 1001), generation of commercial transaction information by the commercial transaction information generating part 210 of the payment server 200c (Operation 1002), presentation of the commercial transaction information to a user through the commercial transaction information presenting part 31 of the user portable terminal 400c (Operation 1003), confirmation of the presented commercial transaction information by the user (Operation 1004), input of a hand-written signature through the hand-written signature input part of the dealer terminal 10c (Operation 1005), and transmission of the generated electronic signature data from the hand-written signature input part 30 to the electronic signature management server 100c (Operation 1006) are the same as Operations 601 to 606 described in Embodiment 2 with reference to the flow chart in Figure 6.

According to the electronic commerce system and method in Embodiment 4, signature authentication processing is conducted. The electronic signature management server 100c receives electronic signature data and commercial transaction information through the data transmitting/receiving part 110, searches for user's registered signature data stored in the registered signature storing part 171 based on the user identity information of commercial transaction information, and compares the registered electronic signature data with the input user's electronic signature data in the signature comparing part 172 (Operation 1007).

Next, the user confirming part 154 directly inquires of a user about agreement on the current commercial transaction (Operation 1008). More specifically, it is confirmed whether or not electronic signature data with an electronic watermark may be conducted in the commercial transaction.

If user's confirmation is obtained (Operation 1008: Y), the process proceeds to electronic watermark embedding processing. The electronic signature management server 100c generates abstract information from electronic signature data in the electronic signature data abstract processing part 152 (Operation 1009). The electronic watermark information obtaining part 151 obtains commercial transaction identity information and abstract information specifying the contents of the current commercial transaction as electronic watermark information (Operation 1010). The electronic watermark embedding processing part 153 embeds an electronic watermark in the electronic signature data by an undisclosed algorithm to generate electronic signature data with an electronic watermark (Operation 1011).

The electronic signature management server 100c sends the generated electronic signature data with an electronic watermark to the dealer terminal 10c and stores it in the commercial transaction data storing part 50 (Operation 1012).

The process of the electronic commerce system and method in Embodiment 4 is as described above. It is to be understood that the above-mentioned process is only an example, and the other processes may be used within the range of the technical idea of the present invention.

According to the electronic commerce system and method in Embodiment 4, a user is not authenticated by the electronic signature management server 100c, so that the contents of processing in a commercial transaction can be reduced, and the processing can be made efficient.

### Embodiment 5

According to an electronic commerce system and method in Embodiment 5, a processing of enhancing convenience in practical use is added. Currently, in partial management of a credit card and a debit card, regarding a commercial transaction involving a small value (a predetermined value or less), input of a signature to a commercial transaction slip is omitted for shortening a procedure time at a shop and reducing a procedure burden on a user. According to the electronic commerce system and method in Embodiment 5, input of a hand-written signature is omitted for a commercial transaction involving a small value (predetermined value or less), and electronic signature omitted commercial transaction information is generated in place of electronic signature data with an electronic watermark to complete a payment.

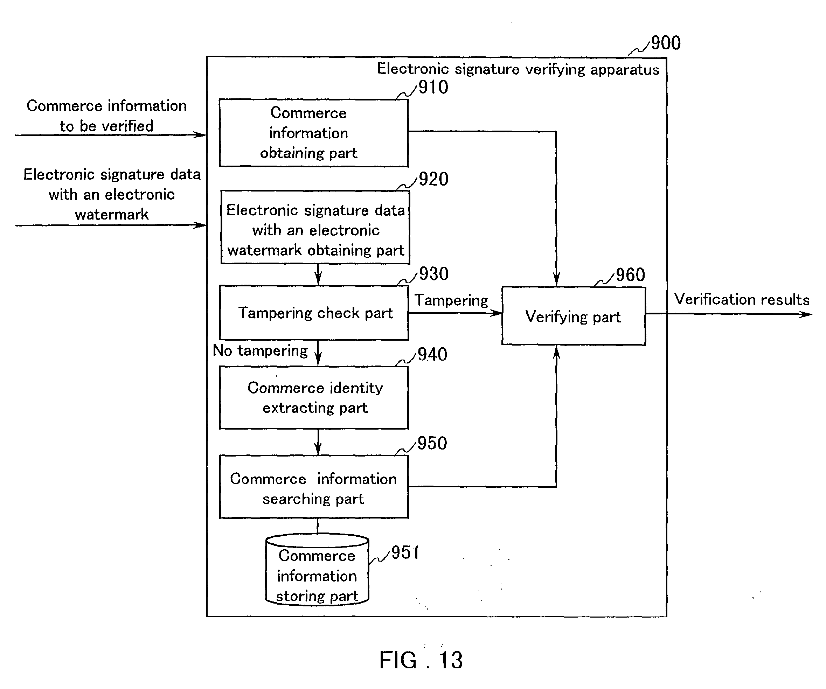

Figure 11 is a block diagram showing an exemplary structure of the electronic commerce system in Embodiment 5. In Figure 11, a payment server 200d includes a hand-written signature omission determining part 220. The hand-written signature omission determining part 220 determines whether or not user authentication using a hand-written signature is omitted, based on commercial transaction information such as dealer identity information, user identity information, and payment value information. For example, the hand-written signature omission determining part 220 can determine whether or not a signature is omitted in accordance with respective dealers, based on the dealer identity information. Alternatively, the hand-written signature omission determining part 220 can determine whether or not a signature is omitted in accordance with respective users, based on the user identity information. Alternatively, the hand-written signature omission determining part 220 can determine whether or not a signature is omitted in accordance with the size of a payment value, based on the payment value information. In the case where omission of a hand-written signature is admitted by the hand-written signature omission determining part 220, reading of electronic signature data by the hand-written signature input part 30 and generation of electronic signature data with an electronic watermark by the electronic watermark embedding part 150 are omitted, and the user identity information and the commercial transaction information are stored in the commercial transaction data storing part 50.

The other components in Figure 11 may be the same as those in Embodiment 1 shown in Figure 1 and Embodiment 2 shown in Figure 2. Herein, it is assumed that the structure other than that of the payment server 200d is the same as that shown in Figure 1, and the description of the other components will be omitted.

Figure 12 is a flow chart showing the process of the electronic commerce system and method in Embodiment 5.

First, input processing of the information on the contents of a commercial transaction and the user identity information through the commercial transaction contents input part 11 and the user identity information reading part 20 (Operation 1201) and generation of commercial transaction information by the commercial transaction information generating part 210 of the payment server 200d (Operation 1202) are the same as Operations 401 and 402 described in Embodiment 1 with reference to the flow chart in Figure 4.

Next, the payment server 200d uses the hand-written signature omission determining part 220 to determine whether or not user authentication using a hand-written signature is omitted, based on the commercial transaction information such as the dealer identity information, the user identity information, and the payment value information.

In the case where user authentication using a hand-written signature is omitted (Operation 1203: Y), Operations 404 to 411 performed in Embodiment 1, Operations 604 to 611 performed in Embodiment 2, Operations 804 to 810 performed in Embodiment 3, or Operations 1004 to 1012 performed in Embodiment 4 are omitted. The electronic watermark embedding part 150 omits embedding of an electronic signature with an electronic watermark in commercial transaction information (Operation 1204), and stores the user identity information and the commercial transaction information in the commercial transaction data storing part 50 (Operation 1205).

As described above, according to the electronic commerce system and method in Embodiment 5, a payment can be completed, omitting the input of a hand-written signature for a commercial transaction involving a small value (predetermined value or less), whereby a procedure time can be shortened at a shop, and a procedure burden on a user can be reduced.

### Embodiment 6

In the case where the authenticity of an electronic signature becomes an issue later due to some trouble in a commercial transaction, an electronic commerce system and method in Embodiment 6 can conduct processing of confirming the authenticity of an electronic signature.

Figure 13 is a block diagram showing an exemplary system structure for confirming the authenticity of an electronic signature in Embodiment 6. Reference numeral 900 denotes an electronic signature verifying apparatus. The electronic signature verifying apparatus 900 includes a commercial transaction information obtaining part 910, an electronic signature data with an electronic watermark obtaining part 920, a tampering check part 930, a commercial transaction identity information extracting part 940, a commercial transaction information searching part 950, a commercial transaction information storing part 951, and a verifying part 960.

The commercial transaction information obtaining part 910 and the electronic signature data with an electronic watermark obtaining part 920 obtain commercial transaction information and electronic signature data with an electronic watermark to be verified stored as the results of a commercial transaction. The obtained commercial transaction information is given to the verifying part 960, and the electronic signature data with an electronic watermark is given to the tampering check part 930 for the processing described later.

The tampering check part 930 checks if the electronic signature data used for a commercial transaction is tampered. The tampering check part 930 determines if the electronic signature data is tampered by inspecting the electronic watermark information embedded in the electronic signature data. In Embodiment 6, tampering of the electronic signature data is detected, in particular, by inspecting abstract information of an electronic signature. In the case where the electronic signature data is tampered, the electronic signature will not correspond to the abstract information added thereto, so that tampering can be detected. More specifically, in the case where an electronic signature is fraudulently rewritten, the abstract information is changed, which allows the tampering check part to verify the fraud with respect to the electronic signature data. In the case of detecting tampering, the tampering check part 930 sends the detection to the verifying part 960, and the verifying part 960 outputs the results of verification of fraud. In the case of not detecting tampering, the tampering check part 930 gives the electronic signature data with an electronic watermark to the commercial transaction identity information extracting part 940.

The commercial transaction identity information extracting part 940 extracts commercial transaction identity information from the electronic signature data with an electronic signature.

The commercial transaction information searching part 950 searches for commercial transaction information stored in the commercial transaction information storing part 951, using the commercial transaction identity information extracted by the commercial transaction identity information extracting part 940 as a search key. The commercial transaction information storing part 951 is a database for storing authentic commercial transaction information prepared in the electronic signature verifying apparatus 900. For example, the commercial transaction information storing part 951 is a database that obtains commercial transaction information stored in the electronic signature management server 100 at a time of a commercial transaction and stores the authentic commercial transaction information. In the electronic signature management server 100 as described in Embodiment 1, the commercial transaction information storing part 951 should be a database corresponding to commercial transaction information stored in the commercial transaction management data storing part 160. In the exemplary system structure in Embodiment 6 shown in Figure 13, the electronic signature verifying apparatus 900 for confirming the authenticity of an electronic signature includes the commercial transaction information storing part 951. However, instead of a system configuration in which the commercial transaction information storing part 951 is included in the electronic signature verifying apparatus 900, an external database managed by a third-party organization such as a payment organization may be used.

The verifying part 960 compares the commercial transaction information input through the commercial transaction information obtaining part 910 (i.e., commercial transaction information to be verified) with the commercial transaction information retrieved by the commercial transaction information searching part 950 (i.e., commercial transaction information corresponding to the electronic signature extracted from the electronic signature data with an electronic watermark). If these pieces of information are matched with each other, it is verified that the electronic signature data with an electronic watermark is authentic and correct with respect to the corresponding commercial transaction information. If they are not matched with each other, it is verified that the electronic signature data with an electronic watermark is not correct with respect to the corresponding commercial transaction information. More specifically, although an electronic signature has been correctly written by a user in the past, it has been fraudulently used for another fictitious commercial transaction; therefore, the corresponding commercial transaction information becomes different.

According to the electronic commerce system and method in Embodiment 6, the authenticity can be verified with respect to both counterfeiting of an electronic signature and misappropriation of an electronic signature.

### Embodiment 7

An electronic commerce system using an electronic signature with an electronic watermark of the present invention can be constructed using various computers, by providing a program describing process steps of realizing the above-mentioned structure recorded on a computer-readable recording medium. A recording medium storing a program including process steps of realizing an electronic commerce system using an electronic signature with an electronic watermark of the present invention may be a recording medium 1000 in a data storage apparatus on the network or a recording medium 1005 such as a hard disk and a RAM of a computer, as well as a portable recording medium 1001 such as a CD-ROM 1002 and a flexible disk 1003. In execution, the program is loaded onto the computer 1004 and executed on a main memory.

According to the electronic commerce system using an electronic signature with an electronic watermark of the present invention, fraudulent use of an electronic signature by the dealer side or a malicious third party can be prevented. Therefore, input of a signature in a commercial transaction can be electronized, which prevents fraudulent use of a card by a user and reduces a cost for keeping a paper commercial transaction slip.

Further, security against fraudulent use by a malicious dealer can be enhanced by providing a hand-written signature input part at a user portable terminal held by a user.

Further, an electronic watermark is provided on the user terminal side, thereby reducing process steps and enhancing a processing efficiency.

Further, as electronic watermark information, abstract information generated from electronic signature data can be used in addition to user identity information and commercial transaction information, and electronic watermark information that is difficult to be tampered can be used.

## Claims

1. An electronic commerce system for conducting a commercial transaction between a user and a dealer, comprising:
a user identity information reading part provided in a dealer terminal, for reading user identity information presented by the user;
a commercial transaction information presenting part provided in the dealer terminal, for presenting commercial transaction information representing contents of the commercial transaction;
a hand-written signature input part provided in the dealer terminal, for reading a hand-written signature input by the user who agrees to the presented commercial transaction information as electronic signature data;
an electronic watermark embedding part provided in a third-party organization, for obtaining commercial transaction information representing contents of the commercial transaction information, the user identity information, and the electronic signature data from the dealer terminal, and providing commercial transaction identity information that uniquely specifies the commercial transaction to the electronic signature data as electronic watermark information, thereby generating electronic signature data with an electronic watermark; and
a commercial transaction data storing part provided in the dealer terminal, for obtaining the electronic signature data with an electronic watermark, and storing the electronic signature data together with the commercial transaction information.

2. An electronic commerce system for conducting a commercial transaction between a user and a dealer, comprising:
a user identity information reading part provided in a dealer terminal, for reading user identity information presented by a user;
a commercial transaction information presenting part provided in the user terminal, for presenting commercial transaction information representing contents of the commercial transaction obtained from the dealer terminal;
a hand-written signature input part provided in a user terminal, for reading a hand-written signature input by a user who agrees to the presented commercial transaction information as electronic signature data;
an electronic watermark embedding part provided in a third-party organization, for obtaining commercial transaction information representing contents of the commercial transaction and the user identity information from the dealer terminal, obtaining the electronic signature data from the user terminal, and providing commercial transaction identity information that uniquely specifies the commercial transaction to the electronic signature data as electronic watermark information, thereby generating electronic signature data with an electronic watermark; and
a commercial transaction data storing part provided in the dealer terminal, for obtaining the electronic signature data with an electronic watermark, and storing the electronic signature data together with the commercial transaction information.

3. An electronic commerce system for conducting a commercial transaction between a user and a dealer, comprising:
a user identity information reading part provided in a dealer terminal, for reading user identity information presented by the user;
a commercial transaction information presenting part provided in the user terminal, for presenting commercial transaction information representing contents of the commercial transaction obtained from the dealer terminal;
a hand-written signature input part provided in the user terminal, for reading a hand-written signature input by the user who agrees to the presented commercial transaction information as electronic signature data;
an electronic watermark embedding part provided in the user terminal, for providing commercial transaction identity information that uniquely specifies the commercial transaction to the electronic signature data as electronic watermark information, thereby generating electronic signature data with an electronic watermark; and
a commercial transaction data storing part provided in the dealer terminal, for obtaining the electronic signature data with an electronic watermark, and storing the electronic signature data together with the commercial transaction information.

4. An electronic commerce system according to any one of claims 1 to 3, wherein the third-party organization includes a signature authenticating part for searching for previously registered authentic signature data of the user, based on the user identity information, and comparing the input electronic signature data with the authentic signature data, thereby authenticating the electronic signature data.

5. An electronic commerce system according to any one of claims 1 to 4, wherein the electronic watermark embedding part includes an electronic signature data abstracting part for generating abstract information by abstracting the electronic signature data to electronic data with a previously specified bit length, and provides the abstract information as well as the commercial transaction identity information to the electronic signature data as electronic watermark information.

6. An electronic commerce system according to any one of claims 1 to 4, wherein the electronic watermark embedding part includes a user confirming part for directly inquiring of the user about agreement on generating of electronic signature data with an electronic watermark in the commercial transaction, based on registered user's contact information, in a case where electronic signature data is transmitted through the dealer terminal, and
the user confirming part notifies the dealer terminal of rejection of generation of the electronic signature data with an electronic watermark, in a case where user's confirmation is not obtained.

7. An electronic commerce system according to claim 6, wherein the electronic watermark embedding part includes a telephone communication system and a voice response system, the contact information of the user is a mobile phone number carried by the user, and the user confirming part inquires of the user about results of the user's confirmation by using voice information through the mobile phone carried by the user to obtain user's confirmation.

8. An electronic commerce system according to claim 6, wherein the electronic watermark embedding part includes a communication part with respect to a portable terminal held by the user, the contact information of the user is address information of the portable terminal held by the user, and the user confirming part inquires of the user about results of the user's confirmation by using electronic data through the portable terminal to obtain user's confirmation.

9. An electronic commerce system according to any one of claims 1 to 3, comprising a hand-written signature omission determining part for determining whether or not processing of authenticating hand-written signature is omitted, based on the commercial transaction information,
wherein, in a case where omission of a hand-written signature is admitted by the hand-written signature omission determining part, reading of electronic signature data by the hand-written signature input part and generation of the electronic signature data with an electronic watermark by the electronic watermark embedding part are omitted, and the read user identification information and the commercial transaction information are stored in the commercial transaction data storing part.

10. An electronic commerce system for verifying correctness of a commercial transaction between a user and a dealer, comprising:
a commercial transaction information obtaining part for obtaining commercial transaction information representing contents of the commercial transaction;
an electronic signature data with an electronic watermark obtaining part for obtaining electronic signature data with an electronic watermark in which commercial transaction identity information uniquely specifying the commercial transaction is provided as electronic watermark information to the electronic signature data used for the commercial transaction;
a tampering check part for inspecting the electronic watermark information of the electronic signature data with an electronic watermark, thereby checking whether or not the electronic signature data with an electronic watermark is tampered;
a commercial transaction identity information extracting part for extracting commercial transaction identity information from the electronic watermark information of the electronic signature data with an electronic watermark;
a commercial transaction information searching part for obtaining commercial transaction information uniquely specified by the commercial transaction identity information from the commercial transaction information storing part storing authentic commercial transaction information; and
a verifying part for comparing the commercial transaction information obtained by the commercial transaction information obtaining part with the commercial transaction information obtained by the commercial transaction information searching part.

11. An electronic commerce method for conducting a commercial transaction between a user and a dealer, comprising:
reading user identity information presented by a user at a dealer terminal;
presenting commercial transaction information representing contents of the commercial transaction at the dealer terminal;
reading a hand-written signature input by the user who agrees to the commercial transaction information presented at the dealer terminal as electronic signature data;
obtaining the commercial transaction information representing contents of the commercial transaction and the user identity information from the dealer terminal in a third-party organization;
providing commercial transaction identity information uniquely specifying the commercial transaction to the electronic signature data as electronic watermark information in the third-party organization to generate electronic signature data with an electronic watermark; and
obtaining the electronic signature data with an electronic watermark and storing it together with the commercial transaction information at the dealer terminal.

12. An electronic commerce method for conducting a commercial transaction between a user and a dealer, comprising:
reading user identity information presented by a user at a dealer terminal;
presenting commercial transaction information representing contents of the commercial transaction at a user terminal;
reading a hand-written signature input by the user who agrees to the commercial transaction information presented at the user terminal as electronic signature data;
obtaining the commercial transaction information representing contents of the commercial transaction and the user identity information from the dealer terminal, and obtaining the electronic signature data from the user terminal in a third-party organization;
providing commercial transaction identity information uniquely specifying the commercial transaction to the electronic signature data as electronic watermark information to generate electronic signature data with an electronic watermark in the third-party organization; and
obtaining the electronic signature data with an electronic watermark and storing it together with the commercial transaction information at the dealer terminal.

13. An electronic commerce method for conducting a commercial transaction between a user and a dealer, comprising:
reading user identity information presented by a user at a dealer terminal;
presenting commercial transaction information representing contents of the commercial transaction obtained from the dealer terminal;
reading a hand-written signature input by the user who agrees to the commercial transaction information presented at the user terminal as electronic signature data;
providing commercial transaction identity information uniquely specifying the commercial transaction to the electronic signature data as electronic watermark information to generate electronic signature data with an electronic watermark at the user terminal; and
obtaining the electronic signature data with an electronic watermark and storing it together with the commercial transaction information at the dealer terminal.

14. An electronic commerce method according to any one of claims 11 to 13, wherein authentic signature data of the user previously registered is searched for, based on the user identity information, in the third-party organization, and the input electronic signature data is compared with the authentic signature data, thereby authenticating the electronic signature data.

15. An electronic commerce method for verifying correctness of a commercial transaction between a user and a dealer, comprising:
obtaining commercial transaction information representing contents of the commercial transaction;
obtaining electronic signature data with an electronic watermark in which a commercial transaction identity information uniquely specifying the commercial transaction is provided as electronic watermark information to the electronic signature data used for the commercial transaction;
inspecting the electronic watermark information of the electronic signature data with an electronic watermark, thereby checking whether or not the electronic signature data with an electronic watermark is tampered;
extracting commercial transaction identity information from the electronic watermark information of the electronic signature data with an electronic watermark;
retrieving commercial transaction information uniquely specified by the commercial transaction identity information from previously stored authentic commercial transaction information; and
comparing the obtained commercial transaction information with the retrieved commercial transaction information.

16. A computer program which, when run on a computer, causes the computer to realize an electronic commerce system for conducting a commercial transaction between a user and a dealer, comprising:
reading user identity information presented by a user at a dealer terminal;
presenting commercial transaction information representing contents of the commercial transaction at the dealer terminal;
reading a hand-written signature input by a user who agrees to the commercial transaction information presented at the dealer terminal as electronic signature data;
obtaining the commercial transaction information representing contents of the commercial transaction, the user identity information, and the electronic signature data from the dealer terminal in a third-party organization;
providing commercial transaction identity information that uniquely specifies the commercial transaction to the electronic signature data as electronic watermark information in the third-party organization, thereby generating electronic signature data with an electronic watermark; and
obtaining the electronic signature data with an electronic watermark and storing it together with the commercial transaction information at the dealer terminal.

17. A computer program which, when run on a computer, causes the computer to realize an electronic commerce system for conducting a commercial transaction between a user and a dealer, comprising:
reading user identity information presented by a user at a dealer terminal;
presenting commercial transaction information representing contents of the commercial transaction at a user terminal;
reading a hand-written signature input by a user who agrees to the commercial transaction information presented at the user terminal as electronic signature data;
obtaining the commercial transaction information representing contents of the commercial transaction and the user identity information from the dealer terminal, and obtaining the electronic signature data from the user terminal in a third-party organization;
providing commercial transaction identity information that uniquely specifies the commercial transaction to the electronic signature data as electronic watermark information in the third-party organization, thereby generating electronic signature data with an electronic watermark; and
obtaining the electronic signature data with an electronic watermark and storing it together with the commercial transaction information at the dealer terminal.

18. A computer program which, when run on a computer, causes the computer to realize an electronic commerce system for conducting a commercial transaction between a user and a dealer, comprising:
reading user identity information presented by a user at a dealer terminal;
presenting commercial transaction information representing contents of the commercial transaction obtained from the dealer terminal;
reading a hand-written signature input by a user who agrees to the commercial transaction information presented by a user terminal as electronic signature data;
providing commercial transaction identity information that uniquely specifies the commercial transaction to the electronic signature data as electronic watermark information at the user terminal to generate electronic signature data with an electronic watermark; and
obtaining the electronic signature data with an electronic watermark and storing it together with the commercial transaction information at the dealer terminal.

19. A computer program according to any one of claims 16 to 18, comprising searching for previously registered authentic signature data of the user, based on the user identity information in the third-party organization, and comparing the input electronic signature data with the authentic signature data, thereby authenticating the electronic signature data.

20. A computer program which, when run on a computer, causes the computer to realize an electronic commerce system for conducting a commercial transaction between a user and a dealer, comprising:
obtaining electronic signature data with an electronic watermark in which commercial transaction identity information uniquely specifying the commercial transaction with respect to the electronic signature data used for the commercial transaction is provided as electronic watermark information;
inspecting the electronic watermark information of the electronic signature data with an electronic watermark, thereby checking whether or not the electronic signature data with an electronic watermark is tampered;
extracting commercial transaction identity information from the electronic watermark information of the electronic signature data with an electronic watermark;
retrieving commercial transaction information uniquely specified by the commercial transaction identity information from previously stored authentic commercial transaction information; and
comparing the obtained commercial transaction information with the retrieved commercial transaction information.

21. A computer-readable recording medium storing the program of any one of claims 16 to 20.
